# EUROPEAN PATENT SPECIFICATION

(11) **EP 1 569 794 B1**
(45) Date of publication and mention of the grant of the patent: **11.10.2006**
(21) Application number: 03809202.9
(22) Date of filing: 20.11.2003
(51) Int. Cl.: B32B 27/32, C08L 23/08

(54) **POTASSIUM IONOMERS MODIFIED WITH AN ORGANIC ACID SALT AND STRUCTURES FABRICATED THEREFROM**
MIT EINEM ORGANISCHEN SÄURESALZ MODIFIZIERTE KALIUMIONOMERE UND DARAUS HERGESTELLTE STRUKTUREN
IONOMERES DE POTASSIUM MODIFIES AU MOYEN D'UN SEL D'ACIDE ORGANIQUE ET STRUCTURES FABRIQUEES AVEC CES IONOMERES

(30) Priority: 20.11.2002 US 427782 P
(43) Date of publication of application: 07.09.2005
(73) Proprietor: E.I. DU PONT DE NEMOURS AND COMPANY, Wilmington, DE 19898 (US)
(72) Inventor: CHEN, John, Chu, Hockessin, DE 19707 (US)
(74) Representative: Morf, Jan Stefan
(86) International application number: PCT/US2003/037670
(87) International publication number: WO 2004/050362

(56) References cited:
- PATENT ABSTRACTS OF JAPAN vol. 2002, no. 12, 12 December 2002 (2002-12-12) & JP 2002 234975 A (DU PONT MITSUI POLYCHEM CO LTD), 23 August 2002 (2002-08-23)
- PATENT ABSTRACTS OF JAPAN vol. 1997, no. 10, 31 October 1997 (1997-10-31) & JP 9 157610 A (SUN A KAKEN CO LTD), 17 June 1997 (1997-06-17)
- PATENT ABSTRACTS OF JAPAN vol. 1998, no. 12, 31 October 1998 (1998-10-31) & JP 10 193495 A (DU PONT MITSUI POLYCHEM CO LTD), 28 July 1998 (1998-07-28)

## Description

This application claims the benefit of U.S. Provisional Application No. 60/427,782, filed November 20, 2002.

### FIELD OF THE INVENTION

This invention relates to an antistatic polymer composition. More particularly it relates to an antistatic ethylene acid copolymer ionomer composition.

### BACKGROUND DISCUSSION AND RELATED ART

Generally, a fabricated article made from a polymeric material can become statically charged, and the surface can attract and hold charged particles such as dust in the air. In some cases an article can become damaged and/or otherwise devalued by the adhesion of electrostatically charged species. For preventing adhesion of charged particles, various approaches for preventing surface static charge buildup have been proposed and put into practical use.

Antistatic agents can be incorporated into the composition of a molded article or an antistatic agent can be applied to the surface of an article as a way of preventing build-up of static charge on an article. Use of antistatic agents is not trouble-free. Materials that come in contact with the composition can become contaminated due to bleeding of the antistatic agent out of the composition and/or the antistatic effect can deteriorate with time. Antistatic agents can be ineffective when applied to ionomers. An applied antistatic film can have inadequate mechanical properties and could be easily damaged, or have poor water resistance, or become tacky due to absorption of water.

Sub-surface antistatic polymer layers can be used to avoid problems encountered with exposing an antistatic layer at the surface of an article. JP 2-28919B discloses an antistatic plastic film in which an ionic conductive resin layer is formed on a plastic film and a waterproof plastic layer having a volume resistivity of 1×10¹³ Ω·cm or less and having a thickness of 10 µm or less is formed on the surface of the ionic conductive resin layer.

JP 61-44646A discloses a charged stain-resistant laminate having an alkali metal salt or amine salt of an ethylene-unsaturated carboxylic acid copolymer as an intermediate layer. JP 10-193495A discloses a dustproof laminate having a composition comprising a thermoplastic resin consisting of a potassium ionomer of an ethylene-unsaturated carboxylic acid and a polyhydroxy compound as an intermediate layer.

### SUMMARY OF THE INVENTION

In one aspect, the present invention is a multilayer article comprising:
(1) at least one polymeric layer comprising a blend of:
   (i) at least one E/X/Y copolymer where E is ethylene, X is a C₃ to C₈ α,β ethylenically unsaturated carboxylic acid, and Y is a softening comonomer selected from alkyl acrylate and alkyl methacrylate wherein the alkyl groups have from one to eight carbon atoms, wherein X is 2-30 weight % of the E/X/Y copolymer and Y is 0-40 weight % of the E/X/Y copolymer, and
   (ii) one or more organic acids or salts thereof; wherein the combined carboxylate salt functionalities of the blend are at least partially neutralized by potassium; and
(2) at least one surface layer.

### DETAILED DESCRIPTION OF THE INVENTION

In one embodiment, the present invention is an article that comprises an acid copolymer ionomer blend that has antistatic properties. Acid copolymer ionomers ("ionomers") are ionic copolymers formed from an olefin such as ethylene and the carboxylate salt of an unsaturated carboxylic acid, such as for example acrylic acid, methacrylic acid, or maleic acid, and optionally softening comonomers. As used herein, the term "copolymers" can describe polymers obtained by copolymerization of at least two different monomer species. The term "terpolymer" can be used to specifically describe a copolymer that is obtained from copolymerization of three different monomer species. At least one alkali metal, transition metal, or alkaline earth metal cation, such as lithium, sodium, potassium, magnesium, calcium, or zinc, or a combination of such cations, can be the counterion that neutralizes the carboxylate anion of the salt. Particularly preferred are ionomers that are at least partially neutralized with potassium cations. Terpolymers can also be made from an olefin such as ethylene, an unsaturated carboxylic acid and a softening comonomer such as an alkyl (meth)acrylate providing "softer" resins which can be neutralized to form softer ionomers.

A blend of the present invention comprises an ionomer comprising (i) at least one E/X/Y copolymer where E is ethylene, X is a C₃ to C₈ α,β ethylenically unsaturated carboxylic acid, and Y is a softening comonomer selected from alkyl acrylate and alkyl methacrylate wherein the alkyl groups have from one to eight carbon atoms, wherein X is 2-30 weight % of the E/X/Y copolymer and Y can be present in an amount of from 0 to 40 weight % of the E/X/Y copolymer. Ionomers suitable for use in the practice of the present invention are known and commercially available from E.I. DuPont de Nemours and Company under the tradename of Surlyn®.

Additionally, a blend of the present invention comprises a second component that is a salt of an organic acid. Blends of the present invention can include at least 5 wt% of the organic salt. Preferably the blends include up to 50 wt%. More preferably the blends include at least 10 wt% of the organic acid or salt, even more preferably at least 20 wt%, and most preferably at least 30 wt% of the organic acid or salt thereof. The organic salts are preferably at least partially neutralized by potassium ion. Preferably, greater than 80% of all the acid components in the blend are neutralized, more preferably greater than 90% are neutralized. Most preferably, 100% of all the acid components in the blend are neutralized. The organic acids employed in the present invention are particularly those that are non-volatile and non-migratory. Non-limiting, illustrative examples of organic acids are stearic, oleic, erucic and behenic acids. Stearic and oleic acids and their isomers are preferred. Even more preferred are branched isomers of suitable organic acids such as branched isomers of stearic and oleic acids, such as isostearic acid and isooleic acid, for example. A more complete description of suitable acids and blends for use in the present invention can be found in U.S. Patent Application entitled "Moisture and Gas Permeable Non-Porous lonomeric Films", filed on November 11, 2003.

Optionally, the antistatic composition of the present invention can comprise a polymer that can be blended into the composition. With the proviso that some thermoplastic polymers or other optional components can be excluded if the inclusion of said optional component affords an adverse influence to the antistatic properties of an article of the present invention, or for any other reason. Compositions described herein can have other desirable properties that can be negatively affected by blending the antistatic composition with other polymeric components. For example, moisture and gas permeability of a film of sheet can be negatively affected in such a blend.

Optional polymeric components that can be blended with the antistatic composition of the present invention include conventional ionomeric copolymers, that is ionomers without antistatic properties, including dipolymer ionomers and terpolymer ionomers; and non-ionic thermoplastic resins. The non-ionic thermoplastic resins would, by way of non-limiting illustrative examples, include thermoplastic elastomers, such as polyurethanes, poly-ether-esters, poly-amide-ethers, polyether-ureas, PEBAX (a family of block copolymers based on polyether-block-amide, commercially supplied by Atochem); styrene-butadiene-styrene (SBS) block copolymers; styrene(ethylene-butylene)-styrene block copolymers; polyamides (oligomeric and polymeric); polyesters; polyvinyl alcohol; polyolefins including polyethylene, polypropylene, ethylene/propylene copolymers; ethylene copolymers with various comonomers, such as vinyl acetate, (meth)acrylates, (meth)acrylic acid, epoxy-functionalized monomer, CO, vinyl alcohol; functionalized polymers with maleic anhydride grafting, epoxidization; elastomers, such as EPDM, metallocene catalyzed PE and copolymer, ground up powders of the thermoset elastomers.

If included, the amount of the optional polymer component is preferably 95% by weight or less, more preferably 90% by weight or less, and especially preferably 60% by weight or less of the whole potassium ionomer composition. In other words, it is preferable that the potassium ionomer accounts for 5% by weight or more, more preferably 10% by weight or more and especially preferably 40% by weight or more of the whole composition.

It can be preferred to incorporate thermoplastic polymers selected from polymeric materials capable of being employed for surface layers of a laminate such as those described below. Of these materials, preferred is use of olefin-based polymers, especially ethylene-based polymers selected from ethylene homopolymers, copolymers of ethylene and α-olefin having three or more carbon atoms, and copolymers of ethylene and an unsaturated ester such as vinyl acetate and unsaturated carboxylic acid esters. There is no necessity of using virgin materials as such ethylene-based polymers. For example, when an ethylene-based polymer is used for a surface layer, off-specification products or molding wastes such as selvages formed during molding may be recycled.

In an antistatic composition of the present invention a polyhydroxy compound having two or more alcoholic hydroxyl groups can also be blended in order to improve antistaticity. Specific examples of such a compound include polyethylene glycols with various molecular weights, polypropylene glycols, polyoxyalkylene glycols such as polyoxyethylene-polyoxypropylene glycol; polyhydric alcohols, such as glycerol, hexanetriol, pentaerythritol and sorbitol, and their ethylene oxide adducts; adducts of a polyvalent amine and an alkylene oxide, etc. The effective blending ratio of the polyhydroxy compound is 15% by weight or less, preferably 10% by weight or less, more preferably 5% by weight or less, and most preferably 0.1 % by weight or less, based on the amount of the organic acid salt modified potassium ionomer.

The compositions of the invention can be used in monolayer or multilayer structures to impart their antistatic properties. The compositions of the present invention be useful in packaging applications such as films, containers, and lids.

The antistatic compositions of this invention can be useful as an intermediate layer of a multilayer laminate. The composition comprises an intermediate, interior or "hidden" layer of a multilayer laminate. An antistatic laminate of this invention is a laminate comprising a layer structure comprising at least two layers, preferably three layers, including at least one surface layer and an intermediate layer, in which the intermediate layer is comprised of the antistatic composition described above.

In still another embodiment, a laminate of the present invention can comprise a surface layer comprising polymeric material(s) having a surface resistivity of 1×10¹⁴ Ω or more and wherein at least one of the surface layers has a 10% decay time not more than 20 seconds at an applied voltage of +5000 V, the 10% decay time being measured at 23 °C under an atmosphere of 50% or 60% relative humidity.

A polymeric material having a surface resistivity of 1×10¹⁴ Ω or more can be used for a surface layer (measured at 23 °C under an atmosphere of 50% relative humidity). This polymeric material is such that a molded article made only of the material exhibits a surface resistivity of 1×10¹⁴ Ω or more. Specific examples thereof include homopolymers of ethylene; copolymers of ethylene and an α-olefin having from 3 to 12 carbon atoms, e.g., high pressure process polyethylene, medium or high density polyethylene, linear low density polyethylene, especially linear low density polyethylene having a density of 940 kg/m³ or less and very low density polyethylene; polypropylene; poly-1-butene; poly-4-methyl-1-pentene; copolymers of ethylene and a polar monomer, for example, an ethylene-vinyl acetate copolymer, copolymers of ethylene and unsaturated carboxylic acid, e.g., acrylic acid, methacrylic acid, monoethyl maleate, maleic anhydride, etc. or their ionomers of Na, Li, K, Zn, Mg, Ca or the like; copolymers of ethylene and at least one kind of unsaturated carboxylic acid ester, for example, methyl acrylate, ethyl acrylate, isobutyl acrylate, n-butyl acrylate, 2-ethylhexyl acrylate, methyl methacrylate, glycidyl methacrylate, dimethyl maleate; copolymers of ethylene and an unsaturated carboxylic acid and unsaturated carboxylic acid ester such as those mentioned previously, or ionomers comprising cations selected from the group consisting of: Na; Li; K; Zn; Mg; Ca and the like; copolymers of ethylene, carbon monoxide and, optionally, an unsaturated carboxylic acid ester or vinyl acetate; olefin-based polymers such as polyolefin elastomers; styrene-based polymers such as rubber-reinforced styrene-based resins, for example, polystyrene, high impact polystyrene, ABS resin, etc.; polyesters such as polyethylene terephthalate, polytrimethylene terephthalate, polytetramethylene terephthalate, polyethylene naphthalate, cyclohexanedimethanol-copolymerized polyethylene terephthalate, and polyester elastomers; polycarbonates; polymethyl methacrylate; or mixtures of two or more of them.

Of such polymeric materials, use of a polymeric material selected from zinc ionomers and ethylene-based polymers produced with a metallocene catalyst are preferred because a laminate having excellent antifouling properties can be obtained easily without using any polyhydroxy compound in the intermediate layer.

The zinc ionomer is one obtained by neutralizing partially with zinc an ethylene-unsaturated carboxylic acid copolymer that may optionally be copolymerized with another polar monomer. One in which other metal ions are present is also suitable.

Examples of the unsaturated carboxylic acid include acrylic acid, methacrylic acid, fumaric acid, maleic anhydride, monomethyl maleate, monoethyl maleate. Particularly preferred are acrylic acid and/or methacrylic acid. Examples of polar monomers that can serve as copolymerization components include vinyl esters such as vinyl acetate and vinyl propionate; unsaturated carboxylic acid esters such as methyl acrylate, ethyl acrylate, isopropyl acrylate, n-butyl acrylate, isobutyl acrylate, n-hexyl acrylate, isooctyl acrylate, methyl methacrylate, dimethyl maleate and diethyl maleate; carbon monoxide. In particular, unsaturated carboxylic acid esters are suitable copolymerization components.

As the ethylene-unsaturated carboxylic acid copolymer as the base polymer of the zinc ionomer, preferred are those having an unsaturated carboxylic acid content of from 1 to 25% by weight, especially from 5 to 20% by weight. The content of the polar monomer that can be copolymerized is, for example, 40% by weight or less, preferably 30% or less. The zinc ionomer is preferably that having a degree of neutralization of from 10 to 90%, particularly from 15 to 80%. When processability and practical physical properties are taken into consideration, preferred is the use of an ionomer having a melt flow rate, measured at 190°C and 2160 g load, of from 0.1 to 100 g/10 minutes, preferably from 0.2 to 50 g/10 minutes.

An ethylene-based polymer suitable as a polymeric material that can be used as the surface layer can be an ethylene homopolymer or a copolymer of ethylene and α-olefin having three or more (preferably from 3 to 12) carbon atoms that is manufactured in the presence of a metallocene catalyst (see for example U.S. Patent No. 5,198,401 and U.S. Patent No. 5,405,922).

Examples of the α-olefin having three or more carbon atoms in the aforementioned ethylene copolymer include propylene, 1-butene, 1-pentene, 1-hexene, 1-octene, 1-decene, 1-dodecene, 4-methyl-1-pentene, etc. In particular, a copolymer of ethylene and an α-olefin having from 3 to 12 carbon atoms is preferably used. In some cases, more than one α-olefin may be present in a mixture that can be copolymerized with ethylene.

As the polymer or copolymer of ethylene manufactured in the presence of a metallocene catalyst, those with various densities may be employed depending upon the α-olefin content in the copolymer. In general, however, it is preferable to use an ethylene copolymer having a density of from 870 to 970 kg/m³, particularly from 890 to 950 kg/m³, and especially from 900 to 940 kg/m³. When processability and practical physical properties are taken into consideration, preferred is the use of a polymer having a melt flow rate, measured at 190°C and 2160 g load, of from 0.1 to 100 g/10 minutes, preferably from 0.2 to 50 g/10 minutes.

A laminate of the present invention can have at least two layers. A structure where another polymeric material layer or an adhesive layer is formed between at least one of the surface layers and the intermediate layer is contemplated herein. Although such a polymeric material layer may be a layer made of a polymeric material mentioned as the surface layer, it is preferably a recovery layer in which recovered wastes such as off-specification products or selvages formed during the production of laminates are used. The material of such a recovery layer can be the same as the material of the surface layer, the intermediate layer or a mixture of these materials.

The adhesive layer that can be formed between a surface layer and an intermediate layer can be any that is capable of improving the adhesion between the surface layer and the intermediate layer. It can be selected from thermoplastic polymers such as those listed as the examples of the material of the surface layers and also may be a hot melt adhesive or application-type adhesives. It can be preferable to use an adhesive capable of being extrusion coated or coextruded selected from thermoplastic polymers and compositions comprising such thermoplastic polymers and tackifiers or the like incorporated thereto.

Anhydride or acid modified ethylene and propylene homo- and copolymers are used as extrudable adhesive layers (also known as "tie" layers) to improve bonding of layers of polymers together when the polymers do not adhere well to each other, thus improving the layer-to-layer adhesion in a multilayer structure. The compositions of the tie layers will be determined according to the compositions of the adjoining layers that need to be bonded in a multilayer structure. One skilled in the polymer art can select the appropriate tie layer based on the other materials used in the structure. Various tie layer compositions are commercially available under the tradename Bynel® from E.I. du Pont de Nemours and Company.

Another preferred embodiment in the present invention is a laminate structure comprising a three-layer structure of a first surface layer (outer layer)/an intermediate layer/a second surface layer (inner layer) wherein the first and second surface layers are made of a polyethylene such as a low, medium or high density polyethylene or an ethylene-unsaturated ester copolymer such as an ethylene-vinyl acetate copolymer and the intermediate layer is made of a organic acid modified potassium ionomer composition of this invention.

The laminate of the present invention can be manufactured by laminating individual layers, preferably by extrusion coating, coextrusion or blow molding. Although the thickness of the whole laminate is arbitrary and dependent on its application, it is preferably from 10 to about 3000 µm, and in particular, from 20 to 1000 µm, for example. In another embodiment of the present invention, at least one surface layer has a 10% decay time (a time required until the potential decays to +500 V from an applied voltage of +5000 V) of 20 seconds or less, preferably 10 seconds or less, and more preferably 1 second or less, the 10% decay time being measured at 23 °C under an atmosphere of 50% relative humidity. For this purpose, it is preferable that the intermediate layer has a thickness of 5 µm or more, preferably of 10 µm or more, and that the thickness of the surface layer with the decay characteristic indicated above is 500 µm or less, especially 300 µm or less, in terms of the thickness of the surface layer or, if a recovery layer or an adhesive layer is formed, in terms of the total thickness of the surface layer and the additional layer(s). Moreover, when a practical performance is taken into consideration, the ratio of the thickness of the surface layer (or, when a recovery layer or an adhesive layer is formed), the total thickness of the surface layer and the additional layer(s) to the thickness of the intermediate layer is preferably from 0.1 to 100 µm, and more preferably from 0.5 to 50 µm.

Individual layers can incorporate various additives as needed, examples of which include antioxidants, light stabilizers, ultraviolet absorbers, pigments, dyes, lubricants, antiblocking agents, inorganic fillers, foaming agents, etc. For example, it is possible to incorporate an organic or inorganic chemical foaming agent such as azodicarbonamide, dinitrosopentamethylenediamine, sulfonylhydrazide, sodium bicarbonate and ammonium bicarbonate at a ratio of from 0.1 to 10 parts by weight per 100 parts by weight of the polymer component constituting a layer.

A laminate film of the invention can be prepared by coextrusion as follows: granulates of the various components are melted in suitable extruders and converted into a film using a converting technique. For coextrusion, the molten polymers are passed through a die or set of dies to form layers of molten polymers that are processed as a laminar flow and then cooled to form a layered structure. The laminate of this invention may also be made by coextrusion followed by lamination onto one or more other layers. Suitable converting techniques include blown film extrusion, cast film extrusion, cast sheet extrusion and extrusion coating.

Besides wrapping materials, the laminate of the present invention can be used for various applications such as base materials of dicing tapes; adhesive tapes or films for semiconductors such as backgrinding films; electric and electronic materials such as marking films, integrated circuit carrier tapes and tapes for taping electronic components; materials for wrapping foods; medical supplies; protection films (e.g., guard films or sheets for boards and lens of glass, plastics or metal); steel-wire covering materials; cleanroom curtains; wallpapers; mats; flooring materials; inner bags of flexible containers; containers; shoes; battery separators; moisture permeable films; antifouling films; dust-proofing films; PVC-free films; tubes, bottles and the like for packing cosmetics, detergents, shampoo, rinse, etc.

According to the present invention, laminates that are excellent in charge decay property and capable of preventing dusts and powders from adhering thereto due to charging are excellent in antifouling properties. Such laminates can be used in the form of a film, a tape, a sheet, a tube, a pipe, a bag, a multilayer container (for example, a container made by blow molding), a rod, various injection-molded articles, various blow-molded articles, etc. Preferred is a laminate in the form of a film, a sheet, a bag or a multilayer container. In such cases, a molded article having a surface layer with the decay characteristic, the surface layer forming an outer surface of the article, is excellent in antifouling property and can avoid soiling of the surface. Further, when the laminate is used as a wrapping material of a powder where it is used in such a manner that the surface layer with the decay characteristic is an inner surface layer, no powder electrostatically adheres to the wrapping material and, therefore, their commodity value is not deteriorated.

As indicated above, another aspect of this invention is a multilayer blown container comprising a laminate of the present invention having as its intermediate layer a layer comprising an organic acid salt modified potassium ionomer composition of this invention. Of note is a lamination structure comprising a three-layer structure of a first surface layer (outer layer)/an intermediate layer/a second surface layer (inner layer) wherein the first and second surface layers are made of a polyethylene such as a low, medium or high density polyethylene or an ethylene-unsaturated ester copolymer such as an ethylene-vinyl acetate copolymer and the intermediate layer is made of a organic acid salt modified potassium ionomer composition of this invention: A multilayer blown container comprising a laminate of this constitution has an outer surface excellent in slipping property, scratch resistance and antifouling property.

### EXAMPLES

Without further elaboration, it is believed that one skilled in the art using the preceding description can utilize the present invention to its fullest extent. The following Examples are, therefore, to be construed as merely illustrative, and not limiting of the disclosure in any way whatsoever. The methods for the evaluation of the raw materials used and the antistatic performances of the resulting laminates in the following Examples and Comparative Examples are shown below.

### Materials Used

Ionomer 1 is a terpolymer comprising ethylene, n-butyl acrylate (23.5 weight %) and methacrylic acid (9 weight percent), neutralized with sodium to 52 % (nominally) using sodium hydroxide, having a melt index of 1.

Ionomer 2 is a copolymer comprising ethylene and methacrylic acid (10 weight percent), neutralized with sodium to 55% (nominally) using sodium hydroxide, having a melt index of 1.3.

Ionomer 3 is a copolymer comprising ethylene and methacrylic acid (19 weight percent), neutralized with sodium to 37% (nominally) using sodium hydroxide, having a melt index of 2.6.

PEG-1 is a polyethylene glycol having average molecular weight of 100,000 gm/mole (available as Polyox WSRN-10 from Union Carbide)

### General Procedures

Employing a Werner & Pfleiderer twin-screw extruder, lonomer 1 was melt blended with potassium stearate at 15 weight %, 30 weight % and 40 weight % to provide Examples 1 through 3.

Similarly, lonomer 2 was melt blended with potassium stearate at 15 weight %, 30 weight % and 40 weight % to provide Examples 4 through 6. lonomer 3 was melt blended with potassium stearate at 40 weight % to provide Example 8.

Examples 3A and 6A were based on the same composition as Examples 3 and 6, except a longer barrel extruder with higher intensity screws were used in the melt blending.

Examples 7, 9 and 10 were prepared similarly to Examples 3A and 6A via the longer barrel extruder and higher intensity screws, with additional stoicheometric amount of potassium hydroxide to neutralize the composition to 100% nominal neutralization.

Employing a Werner & Pfleiderer twin-screw extruder with an extended barrel length and higher intensity screws, Examples 11 through 13 were prepared by melt blending the indicated ionomer, potassium stearate and PEG-1 with additional stoicheometric amount of potassium hydroxide to neutralize the composition to 100% nominal neutralization.

Employing a Werner & Pfleiderer twin-screw extruder with an extended barrel length and higher intensity screws, Examples 14 through 15 were prepared by melt blending the indicated ionomer, and iso-stearic acid with stoicheometric amount of potassium hydroxide to neutralize the composition to 100% nominal neutralization.

Example 16 was prepared by melt blending of Example 14 with ionomer 3 at 50:50 blend ratio through a Werner & Pfleiderer twin-screw extruder.

The compositions were then converted into monolayer blown films or cast films about 3 mils in thickness using laboratory scale blown film equipment or extrusion casting equipment.

The Example compositions are summarized in Table 1. "- -" means a component is not present in the composition.

**Table 1**

| Compositions of Potassium Stearate-Modified lonomers | | | | |
|---|---|---|---|---|
| Composition | lonomer Resin | Modifier (weight %) | Additional Neutralization | PEG-1 (weight %) |
| 1 | lonomer 1 | K Stearate | -- | |
| | | (15%) | | |
| 2 | lonomer 1 | K Stearate | -- | -- |
| | | (30%) | | |
| 3 and 3A | lonomer 1 | K Stearate | -- | -- |
| | | (40%) | | |
| 4 | lonomer 2 | K Stearate | -- | -- |
| | | (15%) | | |
| 5 | lonomer 2 | K Stearate | -- | -- |
| | | (30%) | | |
| 6 and 6A | lonomer 2 | K Stearate | -- | -- |
| | | (40%) | | |
| 7 | lonomer 1 | K Stearate | 100% Neutralization | -- |
| | | (40%) | | |
| 8 | lonomer 3 | K Stearate | -- | -- |
| | | (40%) | | |
| 9 | lonomer 3 | K Stearate | 100% Neutralization | -- |
| | | (40%) | | |
| 10 | lonomer 2 | K Stearate | 100% Neutralization | -- |
| | | (40%) | | |
| 11 | lonomer 1 | K Stearate | 100% Neutralization | 12 |
| | | (40%) | | |
| 12 | lonomer 2 | K Stearate | 100% Neutralization | 12 |
| | | (40%) | | |
| 13 | lonomer 3 | K Stearate | 100% Neutralization | 12 |
| | | (40%) | | |
| 14 | lonomer 3 | K iso-stearate | 100% Neutralization | -- |
| | | (20%) | | |
| 15 | lonomer 3 | K iso-stearate | 100% Neutralization | -- |
| | | (30%) | | |
| 16 | lonomer 3 | K iso-stearate | <100% | -- |
| | | (10%) | neutralization | |

The surface resistivity of the films was measured and reported in Table 2, as ohms/square. "NA" means a measurement was not obtained.

The surface resistivity test was conducted in compliance with the ASTM D-257 method.

**Table 2**

| Surface Resistivity of Potassium Stearate-Modified lonomers | | | |
|---|---|---|---|
| Composition | Surface Resistivity at 50 % RH (ohms) | Surface Resistivity at 30 % RH (ohms/square) | Surface Resistivity at 60 % RH (ohms/square) |
| 1 | NA | NA | 2x10¹⁵ |
| 2 | NA | NA | 5x10¹⁵ |
| 3 | NA | NA | 4x10⁸ |
| 3A | NA | 7x10¹⁴ | 8x10¹³ |
| 4 | NA | NA | NA |
| 5 | NA | NA | 4x10¹⁰ |
| 6 | NA | NA | 5x10¹⁵ |
| 6A | NA | 7x10¹³ | 4x10¹² |
| 7 | NA | 7x10¹³ | 2x10¹¹ |
| 8 | NA | 7x10^{15*} | 7x10^{10*} |
| 9 | NA | 1x10¹¹ | 7x10⁸ |
| 10 | NA | 3x10¹³ | 1x10¹⁰ |
| 11 | NA | 2x10¹² | 8x10⁹ |
| 12 | NA | 1x10¹² | 8x10⁹ |
| 13 | NA | 1x10¹² | 1x10⁹ |
| 14 | 1.55x10⁹ | NA | NA |
| 15 | <1x10⁶ | NA | NA |
| 16 | 1.33x10¹³ | NA | NA |

| | | | |
|---|---|---|---|
| *appeared to have significant noise and scattering | | | |

## Claims

1. A multilayer laminate article comprising:
(1) at least one polymeric layer comprising a blend of:
(i) at least one E/X/Y copolymer where E is ethylene, X is a C₃ to C₈ α,β ethylenically unsaturated carboxylic acid, and Y is a softening comonomer selected from alkyl acrylate and alkyl methacrylate wherein the alkyl groups have from one to eight carbon atoms, wherein X is 2-30 weight % of the E/X/Y copolymer and Y is 0-40 weight % of the E/X/Y copolymer, and
(ii) one or more organic acids or salts thereof; where the combined carboxylic acid functionalities in all ingredients in the blend are at least partially neutralized by potassium; and
(2) at least one surface layer comprising a polymeric material.

2. The article of Claim 1 wherein (ii) is selected from aliphatic, mono-functional organic acids having from 6 to 36 carbon atoms, or salts thereof.

3. The article of Claim 1 wherein (ii) is citric acid or salts thereof.

4. The article of Claim 1 wherein (i) is a terpolymer comprising ethylene, 23.5 weight % of n-butyl acrylate and 9 weight % of methacrylic acid and (ii) is from about 30 to about 40 weight % of potassium stearate; nominally neutralized to 100% with potassium.

5. The article of Claim 1 wherein (i) is a copolymer comprising ethylene and at least 10 weight % of methacrylic acid and (ii) is from 30 to 40 weight % of potassium stearate; nominally neutralized to 100% with potassium.

6. The article of Claim 1 consisting essentially of two polymeric layers.

7. The article of Claim 1 comprising at least three layers wherein there are two surface layers and an intermediate layer, and wherein (i) is the intermediate layer positioned between the two surface layers.

8. The article of Claim 7 wherein the intermediate layer comprises of a blend of:
(a) a terpolymer comprising ethylene, 23.5 weight of % n-butyl acrylate and 9 weight % of methacrylic acid and
(b) 40 weight % of potassium stearate; nominally neutralized to 100% with potassium.

9. The article of Claim 7 wherein the intermediate layer comprises a blend of:
(a) a terpolymer comprising ethylene and at least 10 weight percent of methacrylic acid and
(b) from 30 to 40 weight % of nominally 100% neutralized potassium stearate.

10. The article of Claim 7 wherein at least one of the surface layers is comprised of a polymeric material selected from zinc ionomers and ethylene-based polymers produced using a metallocene catalyst.

11. The article of Claim 7 comprising at least one additional layer selected from an adhesive layer or a recovery layer is positioned between at least one of the surface layers and the intermediate layer.

12. The article of Claims 7 wherein the article is in the form of a sheet, a bag or a multilayer container.

13. The article of Claim 12 wherein the article is a sheet used for wrapping.

14. The multilayer container of Claim 13 wherein the multilayer container is obtained by blow molding.

15. The article of Claim 1 wherein the article is an article selected from articles in the group consisting of: tape, sheets, tubes, pipes, bags, rods; dicing tapes; adhesive tapes or films for semiconductors such as backgrinding films; electric and electronic materials such as marking films, integrated circuit carrier tapes and tapes for taping electronic components; materials for wrapping foods; medical supplies; protection films (e.g., guard films or sheets for boards and lens of glass, plastics or metal); steel-wire covering materials; cleanroom curtains; wallpapers; mats; flooring materials; inner bags of flexible containers; containers; shoes; battery separators; moisture permeable films; antifouling films; dust-proofing films; PVC-free films; tubes, containers.

16. The article of Claim 1 wherein the article is obtained by blow molding or injection molding.

17. An antistatic composition comprising a blend of: (i) at least one E/X/Y copolymer where E is ethylene, X is a C₃ to C₈ α,β ethylenically unsaturated carboxylic acid, and Y is a softening comonomer selected from alkyl acrylate and alkyl methacrylate wherein the alkyl groups have from one to eight carbon atoms, wherein X is 2-30 weight % of the E/X/Y copolymer and Y is 0-40 weight % of the E/X/Y copolymer, and
(ii) one or more organic acids or salts thereof; where the combined carboxylic acid functionalities in all ingredients in the blend are at least partially neutralized by potassium; and
(iii) a thermoplastic polymer in an amount of less than about 95 wt%.

18. An article comprising the composition of Claim 17.

19. The article of Claim 18 wherein the article is an article selected from articles in the group consisting of: tape, sheets, tubes, pipes, bags, rods; dicing tapes; adhesive tapes or films for semiconductors such as backgrinding films; electric and electronic materials such as marking films, integrated circuit carrier tapes and tapes for taping electronic components; materials for wrapping foods; medical supplies; protection films (e.g., guard films or sheets for boards and lens of glass, plastics or metal); steel-wire covering materials; cleanroom curtains; wallpapers; mats; flooring materials; inner bags of flexible containers; containers; shoes; battery separators; moisture permeable films; antifouling films; dust-proofing films; PVC-free films; tubes, containers.

20. The article of Claim 18 wherein the article is obtained by blow molding or injection molding.

## Patentansprüche

1. Mehrlagiger Schichtstoffartikel, aufweisend:
(1) mindestens eine polymere Lage, die ein Blend aufweist aus:
(i) mindestens einem E/X/Y-Copolymer, worin E Ethylen ist, X ist eine α,β-ethylenisch ungesättigte C₃- bis C₈-Carbonsäure und Y ist ein weichmachendes Comonomer, das ausgewählt ist aus Alkylacrylat und Alkylmethacrylat, worin die AlkylGruppen 1 bis 8 Kohlenstoffatome haben und worin X 2% bis 30 Gew.% des E/X/Y-Copolymers und Y 0% bis 40 Gew.% des E/X/Y-Copolymers ausmachen; und
(ii) einer oder mehreren organische Säuren oder deren Salzen, wobei die vereinten Carbonsäure-Funktionalitäten in allen Bestandteilen in dem Blend mindestens teilweise durch Kalium neutralisiert sind; und
(2) mindestens eine Außenlage, die ein polymeres Material aufweist.

2. Artikel nach Anspruch 1, wobei (ii) ausgewählt ist aus aliphatischen monofunktionellen organischen Säuren mit 6 bis 36 Kohlenstoffatomen oder deren Salzen.

3. Artikel nach Anspruch 1, wobei (ii) Citronensäure oder deren Salze ist.

4. Artikel nach Anspruch 1, wobei (i) ein Terpolymer ist, das Ethylen aufweist, 23,5 Gew.% n-Butylacrylat und 9 Gew.% Methacrylsäure und (ii) 30% bis 40 Gew.% Kaliumstearat ist, nominell neutralisiert bis 100% mit Kalium.

5. Artikel nach Anspruch 1, wobei (i) ein Copolymer ist, das Ethylen aufweist und mindestens 10 Gew.% Methacrylsäure und wobei (ii) 30% bis 40 Gew.% Kaliumstearat ist, nominell neutralisiert bis 100% mit Kalium.

6. Artikel nach Anspruch 1, im wesentlichen bestehend aus zwei polymeren Lagen.

7. Artikel nach Anspruch 1, aufweisend mindestens drei Lagen, wobei es zwei Außenlagen gibt und eine Zwischenlage und wobei (i) die zwischen den beiden Außenlagen angeordnete Zwischenlage ist.

8. Artikel nach Anspruch 7, wobei die Zwischenlage ein Blend aufweist aus:
(a) einem Terpolymer, das Ethylen, 23,5 Gew.% n-Butylacrylat und 9 Gew.% Methacrylsäure aufweist und
(b) 40 Gew.% Kaliumstearat, nominell neutralisiert bis zu 100% mit Kalium.

9. Artikel nach Anspruch 7, wobei die Zwischenlage ein Blend aufweist aus:
(a) einem Terpolymer, das Ethylen und mindestens 10 Gew.% Methacrylsäure aufweist und (b) 30% bis 40 Gew.% Kaliumstearat, nominell zu 100% neutralisiert.

10. Artikel nach Anspruch 7, wobei mindestens eine der Außenlagen ein polymeres Material aufweist, das ausgewählt ist aus Zink-Ionomeren und Polymeren auf Basis von Ethylen, die unter Verwendung eines Metallocen-Katalysators hergestellt sind.

11. Artikel nach Anspruch 7, aufweisend mindestens eine zusätzliche Lage, die ausgewählt ist aus einer Klebstofflage oder einer Regeneratlage, die zwischen mindestens einer der Außenlagen und der Zwischenlage angeordnet ist.

12. Artikel nach Anspruch 7, wobei der Artikel in Form eines flächigen Artikels, eines Beutels oder eines mehrlagigen Behälters vorliegt.

13. Artikel nach Anspruch 12, wobei der Artikel ein flächiges Erzeugnis ist, das zum Verpacken verwendet wird.

14. Mehrlagiger Behälter nach Anspruch 13, wobei der mehrlagige Behälter durch Blasformen erhalten wird.

15. Artikel nach Anspruch 1, wobei der Artikel ein Artikel ist, der ausgewählt ist aus Artikeln der Gruppe, bestehend aus: Band, flächigen Erzeugnissen, Schlauchmaterialien, Rohrmaterialien, Beuteln, Stäben, Sägebändern, Klebebändern oder Folien für Halbleiter, wie beispielsweise Folien zum "Backgrinding"; elektrischen und elektronischen Materialien, wie beispielsweise Folien zum Markieren, Trägerbänder für Integrierte Schaltkreise und Bänder für elektronische Bänderbauelemente, Materialien zum Verpacken von Lebensmitteln; medizinische Versorgungen; Schutzfolien (z.B. Haltefolien oder Blätter für Platten und Linsen aus Glas, Kunststoffen oder Metall); Materialien für die Stahldraht-Ummantelung; Reinraum-Vorhänge; Tapeten; Matten; Fußbodenbeläge; Innenbeutel von flexiblen Behältern; Behälter; Schuhe; Batterie-Separatoren; feuchtigkeitsdurchlässige Folien; fäulnisverhütende Folien; Staubschutzfolien; PVC-freie Folien; Schläuche; Behälter.

16. Artikel nach Anspruch 1, wobei der Artikel erhalten wird durch Blasformen oder Spritzgießen.

17. Antistatische Zusammensetzung, aufweisend ein Blend aus:
(i) mindestens einem E/X/Y-Copolymer, worin E Ethylen ist, X ist eine α,β-ethylenisch ungesättigte C₃- bis C₈-Carbonsäure und Y ist ein weichmachendes Comonomer, das ausgewählt ist aus Alkylacrylat und Alkylmethacrylat, worin die AlkylGruppen 1 bis 8 Kohlenstoffatome haben und worin X 2% bis 30 Gew.% des E/X/Y-Copolymers und Y 0% bis 40 Gew.% des E/X/Y-Copolymers ausmachen; und
(ii) einer oder mehreren organische Säuren oder deren Salzen, wobei die vereinten Carbonsäure-Funktionalitäten in allen Bestandteilen in dem Blend mindestens teilweise durch Kalium neutralisiert sind; und
(iii) einem thermoplastischen Polymer in einer Menge von weniger als etwa 95 Gew.%.

18. Artikel, aufweisend die Zusammensetzung nach Anspruch 17.

19. Artikel nach Anspruch 18, wobei der Artikel ein Artikel ist, der ausgewählt ist aus Artikeln der Gruppe, bestehend aus: Band, flächigen Erzeugnissen, Schlauchmaterialien, Rohrmaterialien, Beuteln, Stäben, Sägebändern, Klebebändern oder Folien für Halbleiter, wie beispielsweise Folien zum "Backgrinding"; elektrischen und elektronischen Materialien, wie beispielsweise Folien zum Markieren, Trägerbänder für Integrierte Schaltkreise und Bänder für elektronische Bänderbauelemente, Materialien zum Verpacken von Lebensmitteln; medizinische Versorgungen; Schutzfolien (z.B. Haltefolien oder Blätter für Platten und Linsen aus Glas, Kunststoffen oder Metall); Materialien für die Stahldraht-Ummantelung; Reinraum-Vorhänge; Tapeten; Matten; Fußbodenbeläge; Innenbeutel von flexiblen Behältern; Behälter; Schuhe; Batterie-Separatoren; feuchtigkeitsdurchlässige Folien; fäulnisverhütende Folien; Staubschutzfolien; PVC-freie Folien; Schläuche; Behälter.

20. Artikel nach Anspruch 18, wobei der Artikel erhalten wird durch Blasformen oder Spritzgießen.

## Revendications

1. Article stratifié multicouche comprenant:
(1) au moins une couche polymère comprenant un mélange de:
(i) au moins un copolymère E/X/Y où E représente l'éthylène, X représente un acide carboxylique α, β éthyléniquement insaturé en C₃ à C₈, et Y représente un comonomère d'amollissement choisi parmi l'acrylate d'alkyle et le méthacrylate d'alkyle dans lequel les groupes alkyle ont de un à huit atome(s) de carbone, dans lequel X représente de 2 à 30% en poids du copolymère E/X/Y et Y représente 0 à 40% en poids du copolymère E/X/Y, et
(ii) un ou plusieurs acide(s) organique(s) ou sel(s) de celui(ceux)-ci; où les fonctionnalités acide carboxylique combinées dans tous les ingrédients dans le mélange sont au moins partiellement neutralisées par le potassium; et
(2) au moins une couche de surface comprenant un matériau polymère.

2. Article selon la revendication 1, dans lequel (ii) est choisi parmi les acides organiques aliphatiques, monofonctionnels ayant de 6 à 36 atomes de carbone, ou les sels de ceux-ci.

3. Article selon la revendication 1, dans lequel (ii) représente l'acide citrique ou les sels de celui-ci.

4. Article selon la revendication 1, dans lequel (i) est un terpolymère comprenant de l'éthylène, 23,5% en poids d'acrylate de *n*-butyle et 9% en poids d'acide méthacrylique et (ii) est de 30 à 40% en poids de stéarate de potassium; neutralisé de manière nominale à 100% avec du potassium.

5. Article selon la revendication 1, dans lequel (i) est un copolymère comprenant de l'éthylène et au moins 10% en poids d'acide méthacrylique et (ii) est de 30 à 40% en poids de stéarate de potassium; neutralisé de manière nominale à 100% avec du potassium.

6. Article selon la revendication 1, constitué essentiellement de deux couches polymères.

7. Article selon la revendication 1, comprenant au moins trois couches dans lesquelles il existe deux couches de surface et une couche intermédiaire, et dans lequel (i) représente la couche intermédiaire positionnée entre les deux couches de surface.

8. Article selon la revendication 7, dans lequel la couche intermédiaire comprend un mélange de:
(a) un terpolymère comprenant de l'éthylène, 23,5% en poids d'acrylate de n-butyle et 9% en poids d'acide méthacrylique et
(b) 40% en poids de stéarate de potassium; neutralisé de manière nominale à 100% avec du potassium.

9. Article selon la revendication 7, dans lequel la couche intermédiaire comprend un mélange de:
(a) un terpolymère comprenant de l'éthylène et au moins 10 pour cent en poids d'acide méthacrylique et
(b) de 30 à 40% en poids de stéarate de potassium neutralisé de manière nominale à 100%.

10. Article selon la revendication 7, dans lequel au moins l'une des couches de surface est constituée d'un matériau polymère choisi parmi les ionomères de zinc et les polymères à base d'éthylène produits en utilisant un catalyseur de type métallocène.

11. Article selon la revendication 7, comprenant au moins une couche supplémentaire choisie parmi une couche adhésive ou une couche de récupération qui est positionnée entre au moins l'une parmi les couches de surface et la couche intermédiaire.

12. Article selon la revendication 7, dans lequel l'article se présente sous la forme d'une feuille, d'un sac ou d'un récipient multicouche.

13. Article selon la revendication 12, dans lequel l'article est une feuille utilisée pour l'emballage.

14. Récipient multicouche selon la revendication 13, dans lequel le récipient multicouche est obtenu par moulage par soufflage.

15. Article selon la revendication 1, dans lequel l'article est un article choisi parmi les articles du groupe constitué de: une bande, des feuilles, des tubes, des tuyaux, des sacs, des barres; des bandes de découpage en dés; des bandes ou des films adhésifs pour les semi-conducteurs tels que les films d'amincissement; des matériaux électriques et électroniques tels que les films de marquage, des bandes de support de circuit intégré et des bandes pour les composants électroniques d'enregistrement; des matériaux pour emballer les aliments; des fournitures médicales; des films de protection (par exemple, les films de protection ou les feuilles pour les panneaux et les lentilles en verre, plastique ou métal); des matériaux recouvrant les câbles en acier; des rideaux de salle blanche; des papiers peints; des paillassons; des matériaux de revêtement de sol; des sacs intérieurs de récipients souples; des récipients; des chaussures; des séparateurs de piles; des films perméables à l'humidité; des films résistant aux salissures; des films résistant à la poussière; des films sans PVC; des barquettes, des récipients.

16. Article selon la revendication 1, dans lequel l'article est obtenu par moulage par soufflage ou moulage par injection.

17. Composition antistatique comprenant un mélange de: (i) au moins un copolymère de E/X/Y où E représente l'éthylène, X représente un acide carboxylique α, β éthyléniquement insaturé en C₃ à C₈, et Y représente un comonomère d'amollissement choisi parmi l'acrylate d'alkyle et le méthacrylate d'alkyle dans laquelle les groupes alkyle ont de un à huit atome(s) de carbone, dans laquelle X représente 2 à 30% en poids du copolymère E/X/Y et Y représente 0 à 40% en poids du copolymère E/X/Y, et
(ii) un ou plusieurs acide(s) organique(s) ou sel(s) de celui(ceux)-ci; où les fonctionnalités acide carboxylique combinées dans tous les ingrédients dans le mélange sont au moins partiellement neutralisées par du potassium; et
(iii) un polymère thermoplastique en une quantité inférieure à environ 95% en pds.

18. Article comprenant la composition selon la revendication 17.

19. Article selon la revendication 18, dans lequel l'article est un article choisi parmi les articles du groupe constitué de: une bande, des feuilles, des tubes, des tuyaux, des sacs, des barres; des bandes de découpage en dés; des bandes ou des films adhésifs pour les semi-conducteurs tels que les films d'amincissement; des matériaux électriques et électroniques tels que les films de marquage, des bandes de support de circuit intégré et des bandes pour les composants électroniques d'enregistrement; des matériaux pour emballer les aliments; des fournitures médicales; des films de protection (par exemple, les films de protection ou les feuilles pour les panneaux et les lentilles en verre, plastique ou métal); des matériaux recouvrant les câbles en acier; des rideaux de salle blanche; des papiers peints; des paillassons; des matériaux de revêtement de sol; des sacs intérieurs de récipients souples; des récipients; des chaussures; des séparateurs de piles; des films perméables à l'humidité; des films résistant aux salissures; des films résistant à la poussière; des films sans PVC; des barquettes, des récipients.

20. Article selon la revendication 18, dans lequel l'article est obtenu par moulage par soufflage ou moulage par injection.
